# EUROPEAN PATENT SPECIFICATION

(11) **EP 2 267 561 B1**
(45) Date of publication and mention of the grant of the patent: **19.01.2022**
(21) Application number: 09163857.7
(22) Date of filing: 26.06.2009
(51) Int. Cl.: G05B 17/02

(54) **Programmable and reconfigurable hardware for real power system emulation**
Programmierbare und rekonfigurierbare Hardware zur Wirkleistungssystememulation
Matériel programmable et reconfigurable pour émulation de système d'alimentation réel

(43) Date of publication of application: 29.12.2010
(73) Proprietor: Hitachi Energy Switzerland AG, 5400 Baden (CH)
(72) Inventor: Oudalov, Alexandre, CH-5442, Fislisbach (CH); Maret, Yannick, CH-5405, Dättwil (CH); Nagel, Ira, CH-1004, Lausanne (CH); Fabre, Laurent, CH-1007, Lausanne (CH); Kayal, Maher, CH-1025, St-Sulpice (CH); Cherkaoui, Rachid, CH-1005, Lausanne (CH)
(74) Representative: Vossius & Partner Patentanwälte Rechtsanwälte mbB

(56) References cited:
- EP-A2- 0 445 713
- WO-A1-2009/020684
- Per Karlsson ET AL: "SaWity of YVALp,d STRh ?zqa,Cottmt uiuta cr o Ntd cloud COEt dCOdC tt tbuy Lad IZW-&4 Alm Stability of Voltage and Frequency Control in Distributed Generation Based on Parallel-Connected Converters Feeding Constant Power Loads", , 1 January 2005 (2005-01-01), XP055590915, Retrieved from the Internet: URL:https://ieeexplore.ieee.org/ielx5/1104 8/34861/01665595.pdf?tp=&arnumber=1665595& isnumber=34861&ref=aHR0cHM6Ly9pZWVleHBsb3J lLmllZWUub3JnL3NlYXJjaC9zZWFyY2hyZXN1bHQua nNwP25ld3NlYXJjaD10cnVlJnF1ZXJ5VGV4dD0xNjY 1NTk1 [retrieved on 2019-05-22]
- HU TAO ET AL: "Study on Method of Digital/Analog Hybrid Simulation for the Ultra-High Voltage Grid", POWER SYSTEM TECHNOLOGY AND IEEE POWER INDIA CONFERENCE, 2008. POWERCON 2008. JOINT INTERNATIONAL CONFERENCE ON, IEEE, PISCATAWAY, NJ, USA, 12 October 2008 (2008-10-12), pages 1-5, XP031404608, DOI: 10.1109/ICPST.2008.4745175 ISBN: 978-1-4244-1763-6

## Description

### Background to the invention

The present invention relates to an apparatus for emulating a power system.

### [insert page 1a]

Power system simulation methods have heavy computation requirements thus leading to concerns over the simulation time involved. Nevertheless, international research remains oriented towards the numerical algorithmic approaches applied in simulation methods. This is, at least in part, due to the accuracy of such numerical approaches. However, it seems that the speed of such accurate numerical approaches has reached its limits, particularly where a large stressed power system has to be analysed within the briefest of time periods.

Research has been carried out to develop an alternative method, using emulation techniques employing electronic circuitry. These techniques seek to rapidly assess the operating point limits of a power system. For example, a power system suddenly facing a critical event can be analyzed and appropriate decisions derived from the emulated system so as to maintain the system viability. However, whilst the speed of such emulated power system is faster than for simulated methods using numerical algorithms, the accuracy of such emulations methods is conventionally lower.

In addition, conventional power system emulation methods are limited to a system of reprogrammable power system components and their implementation using digital or analog electronics. However, the topology of the whole system is fixed.

There is therefore a need for a flexible and accurate method of emulation, which is of suitable speed to allow rapid assessment of the operating point limits of a power system. Furthermore, there is a need for an emulation system in which the overall topology of the system is both provided on a dedicated platform as well as being programmable. EP 0 445 713 describes an electric power system simulator comprising first calculator which calculates a generator dynamic characteristic, second calculator which calculates a load dynamic characteristic and third calculator which calculates power transmission condition of an electric power system network, then the first calculator cyclically obtains an amplitude and a phase of an internal induced voltage of the generator based on data on an output power and a terminal voltage of the generator, and the second calculator calculates a load equivalent admittance at predetermined time based on data on an A.C. voltage at a load installation point, and the third calculator calculates a current flowing in each element of the electric power system based on respective data obtained by the first calculator and the second calculator and an electric power system network impedance to obtain the output power and terminal voltage of the generator, so that a condition change of the electric power system including the generators is serially simulated by alternately executing the calculations of the first and the second calculators and the calculation of the third calculator. The document: "Study on Method of Digital/ Analog Hybrid Simulation for the Ultra-High Voltage Grid" by Hu Tao et al, Power System Technology and IEEE Power India Conference, 2008, discloses a study of planning a UHV (Ultra-High Voltage) AC/DC hybrid grid real time simulation test using a digital/analog hybrid simulator.

### Summary of the Invention

The present invention seeks to address the problems of the prior art.

A first aspect of the present invention provides an apparatus according to claim 1.

The programmable switch element may also be used to emulate different scenarios for the given topology, such as, but not restricted to, short circuit of the transmission line and the like. The term 'scenarios' is intended to include localised changes in the topology and/or changes of the programmable element parameters.

Thus, the present invention provides a dedicated interconnected plurality of programmable elements representing basic power network components. Each programmable element contains the necessary components to model a power system including, but not restricted to, generator(s), load(s), transmission and distribution line(s), transformer(s) and other voltage, frequency, active and reactive power flow control devices and the like.

In a first embodiment, the programmable switch element is operable to selectively alter the connections between said one or more programmable elements.

Alternatively, or more preferably in addition, the programmable switch element may be operable to selectively alter the connections between the generator elements, line element (including but not limited to transmission line element) and load element of each programmable element.

The apparatus of the present invention utilises microelectronic circuits rather than the numerical algorithms of conventional digital arrangements. Furthermore, as each programmable element may be selectively programmed, and also selectively connected to other selectively programmable elements, by operation of a programmable switch element, the apparatus of the present invention provides a programmable power system emulator that can simultaneously reproduce a large number of power system phenomena at different time constants and frequencies.

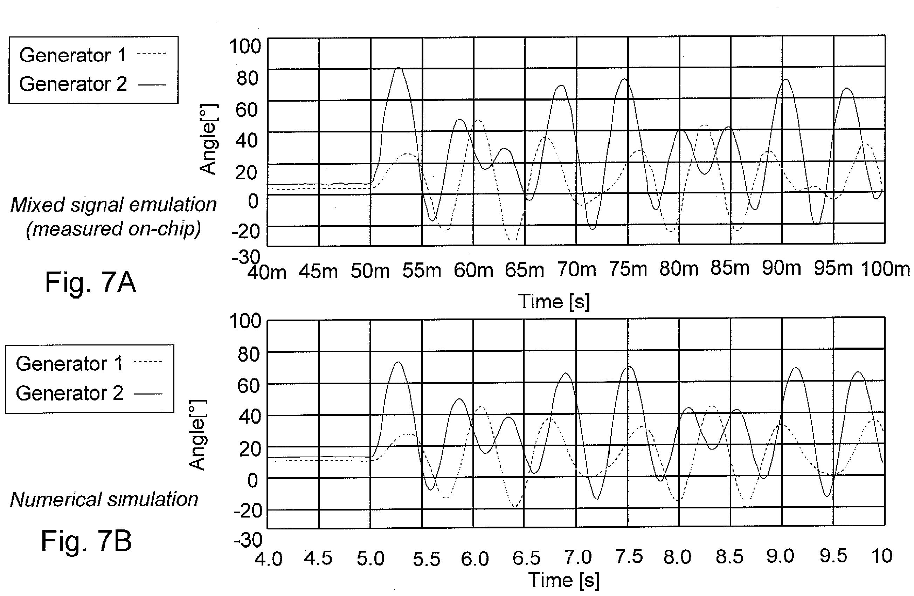

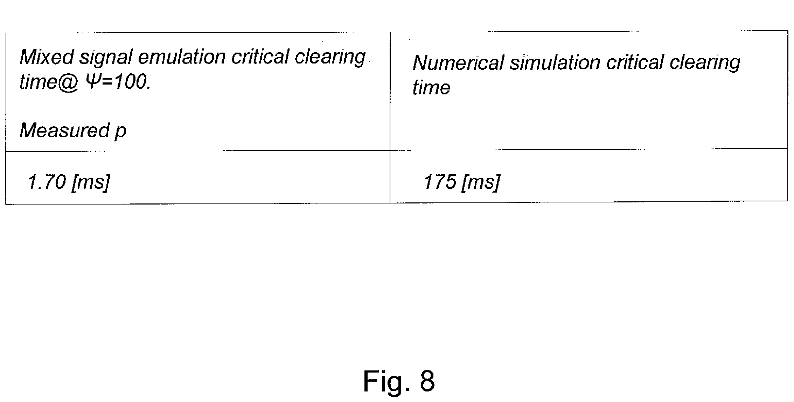

Furthermore, the emulation speed is faster than real time, so that the effects of disturbances may be analysed prior to their appearance in real time. For example, Figure 8 illustrates the increase in terms of speed between real time and emulated time. It shows that a given scenario can be emulated hundred times faster than it happens in real time. An additional example of speedup is shown in figures 7A and 7B : a phenomenon having duration of 10s in real time (figure 7B) takes only 100ms to be emulated (figure 7A).

The faster than real time emulation implies the following. Once a fault is detected (for example, the short-circuit happening at 5s in figure 7B), one second of real time can be used to emulate a single scenario taking hundred seconds in real time or, alternatively, hundred scenarios taking each one second in real time. Based on the emulation results, the power network can then be steered using those scenarios that ensure its stability.

Faster than real time emulation can also be used to perform pre-emptive stability analysis. Contrary to the preceding example, no fault occurs. The emulation system is used to check the effect of faults that could happen. Since emulation is faster than real time several scenarios of, for example, one second of duration can be emulated during one second of real time. If one of these pre-emptive scenarios is found to lead to major downfall of the power network, mitigation actions and contingency plans can be prepared in advance.

The programmable switch element preferably comprises one or more selectable switches.

The term switches is intended to include, but is not limited to:
a) An element which electrically isolates/connects two or more other elements together in order to program the topology; and
b) The local topology changes for a scenario definition.

The plurality of programmable elements may be provided on an application specific integration circuit (ASIC). Alternatively, the plurality of programmable elements are provided for a field programmable gate array, e.g. analog and/or digital

Preferably, the plurality of programmable elements is provided as an array. The array is preferably connected through an analogue bus that represents the power grid in a power system. This allows improved data transmission speed between programmable elements as the analogue bus allows the propagation of waveforms in real time and thus facilitates the mapping between real power system topologies and the electronic emulation.

Further, apparatus according to the present invention may comprise two or more such arrays in communication with one another.

A further aspect of the present invention provides a system for emulating a power system, comprising:
an apparatus according to a first aspect of the present invention; and
a controller for receiving user inputs and operable to supply control signals to the apparatus in dependence upon received user inputs.

### Brief Description of the Drawings

An embodiment of the invention will now be described, by way of example only, and with reference to the accompanying drawings, in which:
Figure 1 illustrates a programmable element of a first embodiment of an apparatus in accordance with a first aspect of the present invention;
Figure 2A illustrates a full programmed array of programmable elements of the embodiment of figure 1;
Figure 2B illustrates an example of a topology configuration of the embodiment of figure 1 after selective programming of the programmable elements within the array of figure 2A;
Figure 3 illustrates the conversion process involved in the selective programming of the programmable elements, the scenario configuration and the configuration of the overall topology of the embodiment of figure 1;
Figure 4 is an example of a simple power system topology;
Figure 5 is a table showing the characteristics of the power system of figure 4;
Figures 6A to 6C illustrate a change in topology of a simple power system within a controlled scenario;
Figure 7A and 7B are graphs showing a results comparison for the scenario illustrated in figure 6;
Figure 8 is a table illustrating the results of the critical short circuit time comparison scenario for the power system of figure 6 and an equivalent numerical simulation; and

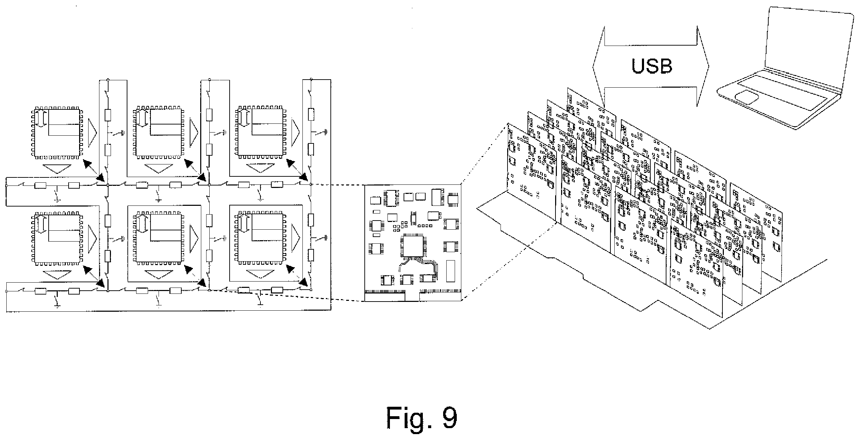

Figure 9 illustrates an array of power system emulation apparatus in accordance with a first aspect of the present invention.

### Detailed Description of the Invention

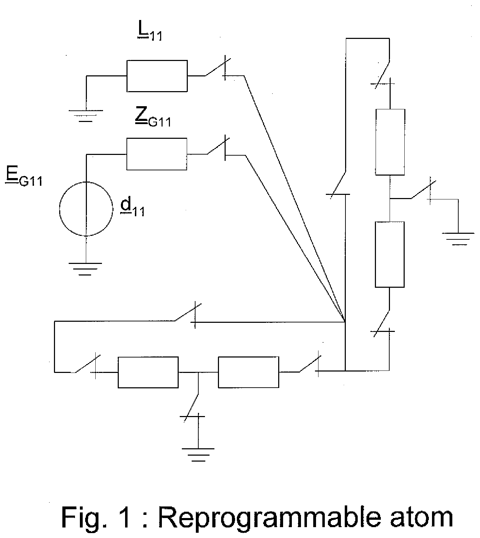

Figure 1 shows an embodiment of a programmable element 10 which contains all the necessary components to model a power system, including a programmable load 12, a programmable generator 14, and a programmable line 16. Switches 18 are provided between each component within the programmable element 10 to allow a plurality of programmable element topologies to be assumed in dependence upon the selective operation of switches 18. It will be appreciated that the programmable element 10 of figure 1 is an example provided for illustrative purposes only and other power system components may also be included with power element 10.

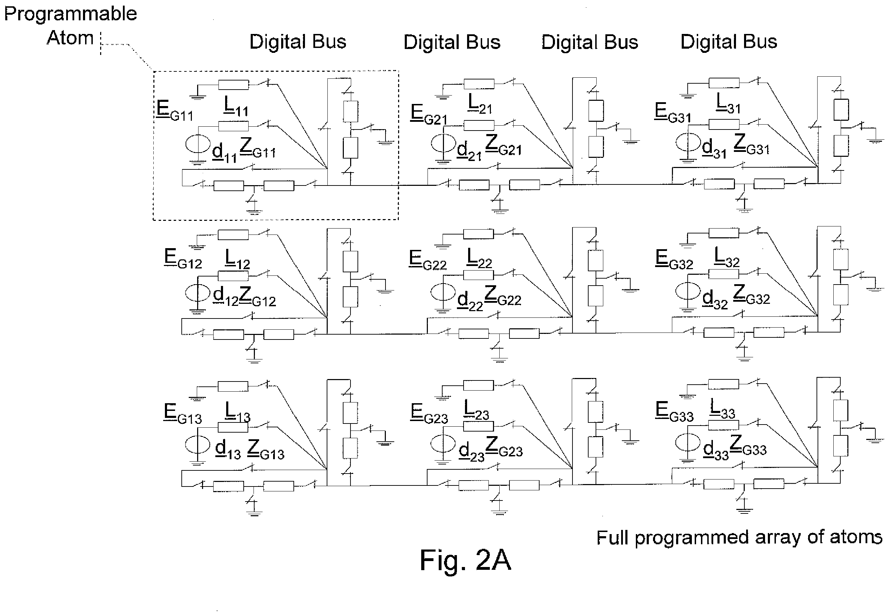

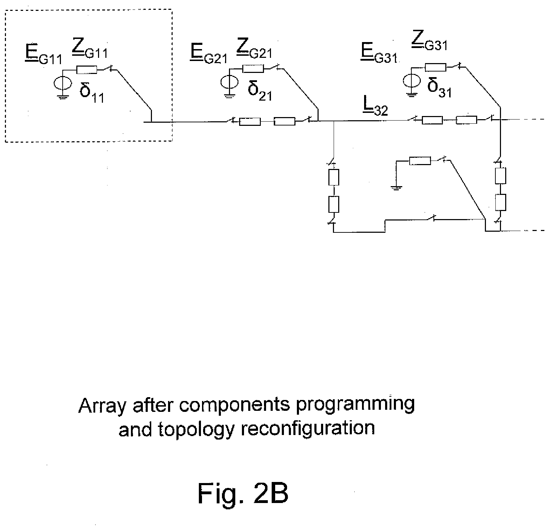

Figure 2 shows an array 20 comprising a plurality of programmable elements 10 connected through an analogue bus that represents the power grid of a power system. Further switches 18' are provided between programmable elements 10 within array 20 allowing the array 20 to assume any one of a plurality of selected topologies in dependence upon the selective operation of switches 18 and 18'. Programmable elements 10 within array 20 are also reprogrammable i.e. can be programmed to a selected power system topology then repeatedly reprogrammed as desired to alternative power system topologies.

The connection of the plurality of programmable elements 10 within array 20 by means of an analogue bus allows waveforms to propagate throughout the array in real time. It allows an intrinsically concurrent communication approach, which has the advantage of avoiding the bottleneck effect observed when using an inherently sequential digital bus. Thus, the speed of data transmission between programmable elements 10 is improved and the mapping between real power system topologies and the emulated electronic representation of the power system facilitated.

Starting with the current steady state of the power system, the programmable elements 10 within array 20 can be programmed to a representative topology by selection operation of switches 18, 18' within programmable elements 10 and within array 20, respectively.

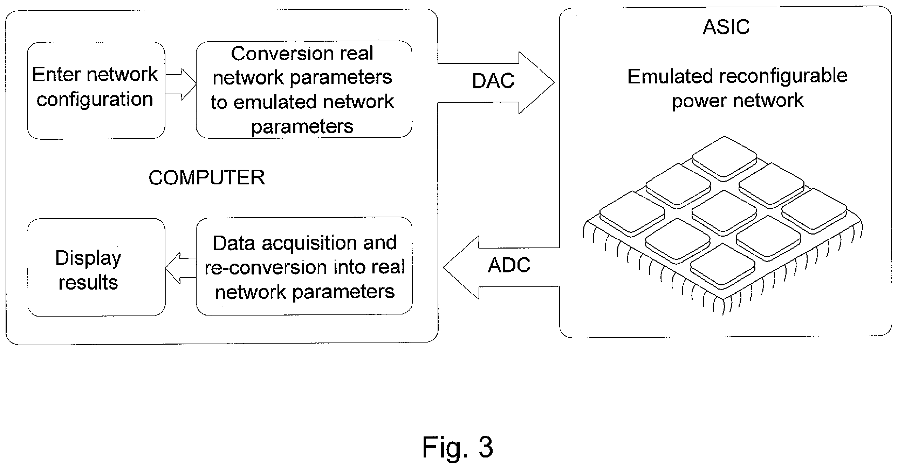

Digital to analogue conversion is necessary in order to program the components with programmable elements 10 and configure the overall topology of array 20. Analogue to digital conversion is also required to measure the system behavior i.e. the emulation results. This is illustrated in figure 3.

Figure 3 shows a selected network configuration i.e. power system configuration at step A which requires emulation. A desired topology is determined based on the real power system parameters to be emulated (step B). Digital to analog conversion then takes place (step C) to provide an emulated reconfigurable power network in the form of a programmed array 20 of programmed elements 10 by selective operation of switches 18, 18' (step C). This emulated power network can then be configured to introduce selected altered parameters to reflect, for example, real power system disruption events or the like. Analogue to digital conversion (step D) is then required to convert the data acquired from the emulated power system into real network parameters and the results displayed to show the effect on a real power network of the emulated power system disruption.

It will be appreciated that, depending on the number of available programmable elements 10 within and array 20, a given array 10 may be used to map more than one topology. This enables parallel emulation that facilitates faster emulation speed using a single array 20.

Furthermore, through the use of an analogue bus, the emulation speed is substantially independent of the number of programmable elements 10 within the array 20 due to the concurrent communication approach facilitated by the analogue bus, in contrast to the sequential approach of a digital bus.

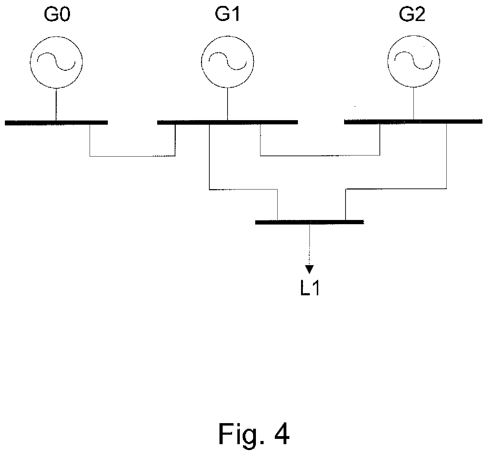

Figure 4 shows a simple reference topology in order to demonstrate the reprogrammable nature of the array topology. The topology shown in figure 4 includes three generators 14 connected to one load 12.

The topology shown in figure 4 is accommodated in a single array 20 of programmable elements 10 presented on a printed circuit board 22. This printed circuit board may be accommodated within an overall system of four printed circuit boards including two programmable generator boards and one board containing the emulated power system and load. The power system is emulated by two purely resistive and equal networks, whereas the load is emulated as constant current source. The fourth printed circuit board is used for interconnected purposes and power supply. The suitable parameters and scenarios can be set through a graphical computer interface and the desired array topology is then programmed via a digital interface such as, but not limited to, USB.

A microcontroller is used for sine and cosine computation as well as for calibration of the components and dynamic compensation of the loop offset. The speed of the chosen A/D and D/A converters connected to the microcontrollers determines the limitation of the time scaling factor ψ= dt _{powerworld}/dt ₑₘᵤₗₐₜₒᵣ. It becomes possible to link the real power world and the analog emulation using the scaling factors ψ. For this implementation the time scaling factor is equal to ψ=100.

### Results comparison - simulation versus emulation

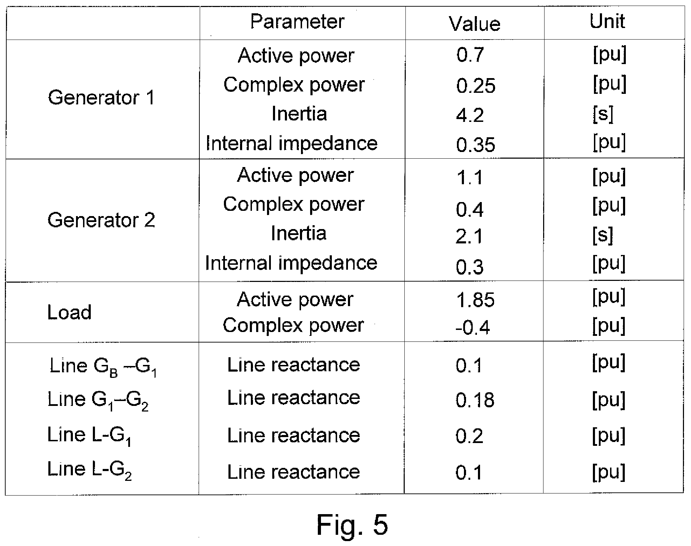

Numerical simulation and mixed signal measurements emulation results are compared using the reference topology with a typical scenario. A reference simulator based on numerical algorithms has been realized using Labview in order to compare numerical simulation and mixed signal emulation approach. Figure 5 shows the characteristics of the described power system.

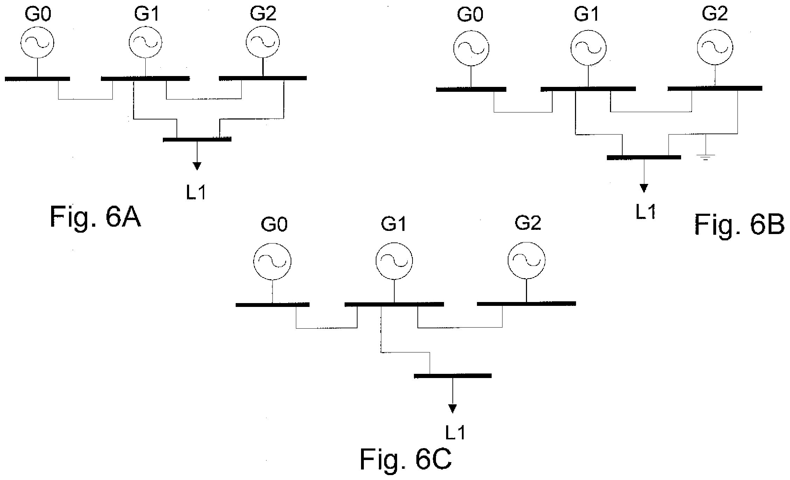

Figures 6A to C show a scenario applied to a reference topology:
Figure 6A shows a stationary state power system topology using the values computed through load flow;
Figure 6B shows a three phase short-circuit between generator G2 and load L1 in the middle of this transmission line; and
Figure 6C shows disconnection of the short-circuited transmission line after a certain time.

Two different comparisons have to be done in order to validate the DC emulation approach.
1. Validating the behavior of the electrical angle δ of the emulated generators (see Figure 6). Regarding the time scale it shows that ψ=100. Where δ is the rotor angle with respect to a voltage and phase reference and ψ is the time ratio between the emulated time and the real time;
2. Evaluating if the information of the critical short-circuit clearing time is viable and is shown in figure 8.

Before emulation, the generator and load model circuitry need to be calibrated and the offset needs to be compensated in order to make it possible to meet with precision the results of numerical simulation. Both of the above comparisons show that mixed signal emulation is an excellent trade-off for transient stability computation in terms of speed, precision and facility of calibration.

It will be appreciated that two or more programmable arrays may communicate between each other by means of different communication systems.

Although aspects of the invention have been described with reference to the embodiment shown in the accompanying drawings, it is to be understood that the invention is not limited to the precise embodiment shown but to the appended claims, that various changes and modifications may be effected without further inventive skill and effort, for example, it will be appreciated that the present invention may be applied to various aspects of real time power systems including real time power system dynamic security assessments, robustness detection and improvement of global power system steady state, detection of critical short circuit clearing time, power system restoration, stability problem prediction with solution proposal, and microgrids.

## Claims

1. Apparatus for emulation of a power system, the apparatus comprising a plurality of programmable elements, selectively connectable to one another; each programmable element comprising:
a. at least two elements selected from the group consisting of a generator element, a line element and a load element; and
b. a programmable switch element, operable to connect selectively the at least two elements of each programmable element to one another, and to connect selectively the programmable element to one or more other programmable elements,
wherein the programmable switch element is operable to alter selectively the connections between one or more programmable elements, and wherein an emulation speed for the emulation of the power system is faster than real time so that effects of disturbances may be analysed prior to their appearance in real time.

2. Apparatus according to Claim 1, wherein at least one programmable element comprises a generator element and a line element, and another programmable element comprises a load element and a line element.

3. Apparatus according to Claim 1, wherein at least one programmable element comprises a programmable generator element, a programmable line element, a programmable load element, and another programmable element comprises a programmable generator element, a programmable line element.

4. Apparatus according to any preceding Claim, wherein the programmable switch element is operable to alter selectively the connections between the generator element, transmission line element and load element of each programmable element.

5. Apparatus according to any preceding Claim, wherein the programmable switch element comprises one or more selectable switches.

6. Apparatus according to any preceding Claim, wherein the plurality of programmable elements is provided on an application specific integrated circuit, ASIC.

7. Apparatus according to any one of Claims 1 to 6, wherein the plurality of programmable elements is provided for a field programmable gate array.

8. Apparatus according to Claim 7, wherein the programmable gate array is an analog gate array and/or a digital gate array.

9. Apparatus according to any preceding Claim, wherein the plurality of programmable elements is provided as an array.

10. Apparatus according to Claim 9 comprising two or more arrays in communication with one another.

11. A system for emulating a power system, comprising:
an apparatus as claimed in any one of the preceding Claims; and
a controller for receiving user inputs and operable to supply control signals to the apparatus in dependence upon received user inputs.

## Patentansprüche

1. Vorrichtung zur Emulation eines Energiesystems, wobei die Vorrichtung mehrere programmierbare Elemente umfasst, die selektiv miteinander verbunden werden können; wobei jedes programmierbare Element umfasst:
a. mindestens zwei Elemente, ausgewählt aus der Gruppe bestehend aus einem Generatorelement, einem Leitungselement und einem Lastelement; und
b. ein programmierbares Schaltelement, das betreibbar ist, um selektiv die mindestens zwei Elemente jedes programmierbaren Elements miteinander zu verbinden und um selektiv das programmierbare Element mit einem oder mehreren anderen programmierbaren Elementen zu verbinden,
wobei das programmierbare Schaltelement betreibbar ist, um selektiv die Verbindungen zwischen einem oder mehreren programmierbaren Elementen zu ändern, und
wobei eine emulierte Geschwindigkeit für die Emulation des Stromnetzes schneller als die Echtzeit ist, so dass die Auswirkungen von Störungen analysiert werden können, bevor sie in Echtzeit auftreten.

2. Vorrichtung nach Anspruch 1, wobei mindestens ein programmierbares Element ein Generatorelement und ein Leitungselement umfasst, und ein anderes programmierbares Element ein Lastelement und ein Leitungselement umfasst.

3. Vorrichtung nach Anspruch 1, wobei mindestens ein programmierbares Element ein programmierbares Generatorelement, ein programmierbares Leitungselement, ein programmierbares Lastelement umfasst, und ein anderes programmierbares Element ein programmierbares Generatorelement, ein programmierbares Leitungselement umfasst.

4. Vorrichtung nach einem der vorhergehenden Ansprüche, wobei das programmierbare Schaltelement betreibbar ist, um selektiv die Verbindungen zwischen dem Generatorelement, dem Übertragungsleitungselement und dem Lastelement jedes programmierbaren Elements zu ändern.

5. Vorrichtung nach einem der vorhergehenden Ansprüche, wobei das programmierbare Schaltelement einen oder mehrere wählbare Schalter umfasst.

6. Vorrichtung nach einem der vorhergehenden Ansprüche, wobei die mehreren programmierbaren Elemente auf einer anwendungsspezifischen integrierten Schaltung, ASIC, bereitgestellt sind.

7. Vorrichtung nach einem der Ansprüche 1 bis 6, wobei die mehreren programmierbaren Elemente für ein feldprogrammierbares Gate-Array bereitgestellt sind.

8. Vorrichtung nach Anspruch 7, wobei das programmierbare Gate-Array ein analoges Gate-Array und/oder ein digitales Gate-Array ist.

9. Vorrichtung nach einem der vorhergehenden Ansprüche, wobei die mehreren programmierbaren Elemente als ein Array bereitgestellt werden.

10. Vorrichtung nach Anspruch 9, umfassend zwei oder mehr Arrays, die miteinander kommunizieren.

11. Ein System zum Emulieren eines Energiesystems, umfassend:
eine Vorrichtung nach einem der vorhergehenden Ansprüche; und
eine Steuerung, um Benutzereingaben zu empfangen und die betreibbar ist, um der Vorrichtung in Abhängigkeit von empfangenen Benutzereingaben Steuersignale zuzuführen.

## Revendications

1. Appareil pour l'émulation d'un système d'alimentation, l'appareil comprenant une pluralité d'éléments programmables, pouvant être sélectivement connectés les uns aux autres ; chaque élément programmable comprenant :
a. au moins deux éléments sélectionnés dans le groupe consistant en un élément générateur, un élément ligne et un élément de charge ; et
b. un élément de commutation programmable, actionnable pour connecter sélectivement l'un à l'autre les au moins deux éléments de chaque élément programmable, et connecter sélectivement l'élément programmable à un ou plusieurs autres éléments programmables,
dans lequel l'élément de commutation programmable est actionnable pour modifier sélectivement les connexions entre un ou plusieurs éléments programmables, et
dans lequel une vitesse d'émulation pour l'émulation du système d'alimentation est plus rapide que le temps réel afin que les effets de perturbations puissent être analysés avant leur apparition en temps réel.

2. Appareil selon la revendication 1, dans lequel au moins un élément programmable comprend un élément générateur et un élément de ligne, et un autre élément programmable comprend un élément de charge et un élément de ligne.

3. Appareil selon la revendication l, dans lequel au moins un élément programmable comprend un élément générateur programmable, un élément de ligne programmable, un élément de charge programmable, et un autre élément programmable comprend un élément générateur programmable, un élément de ligne programmable.

4. Appareil selon n'importe quelle revendication précédente, dans lequel l'élément de commutation programmable est actionnable pour modifier sélectivement les connexions entre l'élément générateur, l'élément de ligne de transmission et l'élément de charge de chaque élément programmable.

5. Appareil selon n'importe quelle revendication précédente, dans lequel l'élément de commutation programmable comprend un ou plusieurs commutateurs sélectionnables.

6. Appareil selon n'importe quelle revendication précédente, dans lequel la pluralité d'éléments programmables est fournie sur un circuit intégré spécifique à l'application, ASIC.

7. Appareil selon l'une quelconque des revendications 1 à 6, dans lequel la pluralité d'éléments programmables est fournie pour un réseau prédiffusé programmable par l'utilisateur.

8. Appareil selon la revendication 7, dans lequel le réseau prédiffusé programmable est un réseau prédiffusé analogique et/ou un réseau prédiffusé numérique.

9. Appareil selon n'importe quelle revendication précédente, dans lequel la pluralité d'éléments programmables est fournie sous forme de réseau.

10. Appareil selon la revendication 9 comprenant deux ou plusieurs réseaux en communication entre eux.

11. Un système d'émulation d'un système d'alimentation, comprenant :
un appareil selon l'une quelconque des revendications précédentes ; et
un contrôleur destiné à recevoir des entrées d'utilisateur et exploitable pour fournir des signaux de commande à l'appareil en fonction des entrées d'utilisateur reçues.
